Europäisches Patentamt

European Patent Office

Office européen des brevets

(11) Veröffentlichungsnummer: **0 069 991**
**B1**

## (12) EUROPÄISCHE PATENTSCHRIFT

(45) Veröffentlichungstag der Patentschrift: **23.03.88**

(21) Anmeldenummer: **82106095.1**

(22) Anmeldetag: **08.07.82**

(51) Int. Cl.⁴: **B 66 C 23/00**

(54) **Hebezeug zum manuellen Bewegen von Lasten.**

(30) Priorität: **15.07.81 DE 3127853**
**15.07.81 DE 3127879**
**12.02.82 DE 3204885**

(43) Veröffentlichungstag der Anmeldung:
**19.01.83 Patentblatt 83/03**

(45) Bekanntmachung des Hinweises auf die
Patenterteilung:
**23.03.88 Patentblatt 88/12**

(84) Benannte Vertragsstaaten:
**AT BE CH FR GB IT LI LU NL SE**

(56) Entgegenhaltungen:
**BE-A- 762 941**
**DE-A-2 041 152**
**DE-A-2 717 221**
**FR-A-2 116 553**
**FR-A-2 350 930**
**FR-A-2 390 349**
**FR-A-2 436 656**
**US-A-2 397 271**
**US-A-3 883 105**

(73) Patentinhaber: **EMIL DAUTEL GMBH**
**Dieselstrasse 33**
**D-7105 Leingarten (DE)**

(72) Erfinder: **Dolinsek, Hans**
**Entenweg 16**
**D-7000 Stuttgart 40 (DE)**

(74) Vertreter: **Patentanwälte Phys. Bartels Dipl.-Ing.**
**Fink Dr.-Ing. Held**
**Lange Strasse 51**
**D-7000 Stuttgart 1 (DE)**

Courier Press, Leamington Spa, England.

EP 0 069 991 B1

## Beschreibung

Die Erfindung betrifft ein Hebezeug zum manuellen Bewegen von Lasten nach dem Oberbegriff des Patentanspruchs 1.

Ein Hebezeug dieser Art ist durch die DE—A—26 21 028 bekannt. Bei diesem bekannten Hebezeug bleibt der durch den Arbeitszylinder ausbalancierte Zustand erhalten, wenn die Last innerhalb einer Horizontalebene bewegt wird. Differenzkräfte treten jedoch immer dann auf, wenn eine Bewegung der Last mit einer vertikalen Bewegungskomponente erfolgt. Daher muß ein Steuerhebel, der die Druckmittelversorgung des Arbeitszylinders steuert, nicht nur betätigt werden, um bei angehängter Last das Hebezeug einmal in den Gleichgewichtszustand zu bringen, sondern auch jedes Mal dann, wenn die Last gehoben oder gesenkt werden muß. Um dabei eine Übersteuerung zu vermeiden, muß der Steuerhebel sehr feinfühlig betätigt werden, was die Anwendung des bekannten Hebezeuges erschwert.

Durch die DE—B—14 31 892 ist zwar ein Hebezeug einer anderen Gattung bekannt, bei dem auch das Heben und Senken der Last manuell durchgeführt werden kann. Dies ist bei diesem bekannten Hebezeug durch eine komplizierte Vorrichtung erreicht, mittels deren der vom Ausleger abgekehrte Angriffspunkt des Arbeitszylinders beim Wippen des Auslegers automatisch so verschoben wird, daß der Arbeitszylinder immer eine genau vertikale Lage einnimmt, so daß dadurch gewährleistet ist, daß bei konstantem Arbeitsdruck im Arbeitszylinder bei den verschiedenen Neigungen des Auslegers das Lastmoment immer durch das Kraftmoment des Arbeitszylinders ausgeglichen ist. Durch die komplizierte Vorrichtung zum automatischen Verstellen des Angriffspunktes des Arbeitszylinders ist diese Lösung jedoch verhältnismäßig kostspielig.

Durch die DE—A—20 41 152 ist ein weiteres Hebezeug bekannt, bei dem, ähnlich wie bei dem eingangs genannten bekannten Hebezeug, das Lastmoment immer durch Einstellen des Druckes im Arbeitszylinder ausgeglichen werden muß. Darüber hinaus unterschiedet sich dieses bekannte Hebezeug vom eingangs genannten bekannten Hebezeug noch dadurch, daß der Ausleger einarmig ist, so daß bei diesem Ausleger eine Bewegung der Last in einer Horizontalebene ohne eine dazugehörige Wippbewegung des Auslegers nicht möglich ist und daß der der Auslegerwippachse benachbarte kurze Schenkel des den Ausleger bildenden Parallelogrammgestänges nicht fest mit dem Träger verbunden ist. Dadurch ist die Gefahr nicht auszuschließen, daß, wenn die Last horizontal bewegt wird, das den Ausleger bildende Parallelogramm zusammenklappt und dadurch die Last in einer horizontalen Richtung so geschleudert wird, daß die Bedienungsperson von der Last schwer verletzt werden kann.

Der Erfindung liegt die Aufgabe zu Grunde, ein Hebezeug der eingangs genannten Art zu schaffen, das ein manuelles Bewegen einer Last in drei zueinander senkrechten Richtungen ermöglicht und eine möglichst einfache und damit kostensparende und betriebssichere Bauweise aufweist.

Diese Aufgabe ist durch die im Patentanspruch 1 genannten Merkmale gelöst. Durch den bei Wippbewegungen des Auslegers konstant bleibenden Druck im Arbeitszylinder wird die Möglichkeit geschaffen, daß der Ausleger im ausgeglichenen Zustand im labilen Gleichgewicht ist. Dadurch ergibt sich für das Wippen des Auslegers ein Kraftdiagramm, nach dem die beim Auswippen des Auslegers aus seiner ausgeglichenen labilen Gleichgewichtslage auftretenden Kräfte den Ausleger in eine in der gleichen Richtung ausgewippte stabile Gleichgewichtslage drücken. Die hierbei zwischen der ausgeglichenen labilen Gleichgewichtslage und den zu beiden Seiten dieser befindlichen stabilen Gleichgewichtslage auftretenden Kräfte können nun durch eine optimale Anordnung der Gelenkachsen des Arbeitszylinders am Ausleger und am Träger so klein gehalten werden, daß sie von einer neben der Last angreifenden Bedienungsperson manuell sicher und ohne Anstrengung beherrschbar sind.

Dadurch wird eine außerordentlich einfache und betriebssichere Bauweise erreicht, da der Arbeitszylinder nunmehr über die beiden Gelenke fest mit dem Ausleger und dem Träger verbunden ist und trotzdem bei konstantem Arbeitsdruck im Arbeitszylinder die Last manuelle gehoben und gesenkt werden kann.

Je nach der Größe des Hebezeuges und der zu hebenden Last ist es vorteilhaft, den wippbereich des Auslegers so zu begrenzen, daß die zum Heben und Senken der Last von bis zu 200 kg erforderliche manuelle Kraft den Betrag von etwa 2 kg nicht überschreitet. Eine solche Kraft kann von einer Bedienungsperson sicher und ohne Anstrengung aufgebracht werden.

Die zur Ausführung der Erfindung zu ermittelnde Lage der Gelenke zum Befestigen des Arbeitszylinders kann bei jeder konkreten Ausführungsform des Hebezeuges ohne weiteres durch Optimal-Berechnungen ermittelt werden.

Ohne besondere Maßnahmen muß bei dem oben beschriebenen erfindungsgemäßen Hebezeug für jede Last der Arbeitsdruck im Arbeitszylinder so eingestellt werden, daß bei einer Neigung des Auslegers, z.B. bei der Neigung 0°, das vom Arbeitszylinder verursachte Kraftmoment das Lastmoment ausgleicht. Um der Bedienungsperson auch in dieser Beziehung die Handhabung des erfindungsgemäßen Hebezeuges zu erleichtern, ist bei einer besonders bevorzugten Ausführungsform der Erfindung vorgesehen, daß der Ausleger zum Steuern des Steuergerätes mit dem Lastaufnahmemittel relativ zu diesem nach oben gegen eine Rückstellkraft bewegbar verbunden ist, deren Maximalwert durch eine Übersetzung der zu hebenden Last und deren Minimalwert der manuellen Kraft der Bedienungsperson angepaßt sind, so daß die Bedienungsperson den Ausleger relativ zu dem mit der Last verbundenen Lastaufnahmemittel hochwippen und dadurch das Steuergerät betätigen kann, bis im Arbeitszylinder ein der Last angepaßter Arbeitsdruck eingestellt ist. Dadurch wird erreicht, daß, wenn die Bedienungsperson nach dem Verbinden einer Last mit dem Lastaufnahmemittel das freie Ende des Auslegers gegen den Minimalwert der Rückstellkraft anhebt, durch diese Relativbewegung zwischen der ruhenden Last und dem angehobenen Ausleger das Steuergerät zur Einstellung eines mit dieser Relativbewegung wachsenden Arbeitsdruckes verstellt wird, bis der Arbeitsdruck ausreicht, um die Last am Ausleger zu tragen. Ist dieser Zustand erreicht, dann wird bei einer weiteren vertikalen Anhebung des freien Auslegerendes die Last, wie oben beschrieben, angehoben, ohne daß sich die Relativstellung zwischen dem Lastaufnahmemittel und dem freien Ende des Auslegers und damit die Einstellung des Steuergerätes ändert, wodurch auch keine weitere Änderung des Arbeitsdruckes im Arbeitszylinder eintritt. In dem System Lastaufnahmemittel und Auslegerende wird nämlich die Last nunmehr durch die genannte Übersetzung von der angepaßten Rückstellkraft gehalten. Bei einem weiteren wippen des Auslegers ändert sich dann weder die Last noch die Rückstellkraft, was für eine die Einstellung des Steuergerätes ändernde Relativbewegung notwendig wäre. Um die Bedienung des Hebezeuges gemäß der Erfindung narrensicher zu machen, kann am Ausleger ein Handgriff vorhanden sein, der für das manuelle Wippen des Auslegers relativ zum Lastaufnahmemittel vorgesehen ist. Dadurch wird erreicht, daß die Bedienungsperson ohne besondere Anweisung zum Ergreifen des Handgriffes am Auslegerende angeregt wird und durch Anheben des Auslegers automatisch den für die Manipulation der Last erforderlichen Arbeitsdruck im Arbeitszylinder einstellen kann.

Das Konstanthalten des Arbeitsdruckes im Arbeitszylinder kann bei einem hydraulischen Arbeitszylinder durch entsprechende Steuerungen ohne weiteres erreicht werden. Besonders einfach läßt sich dieseu Ziel dadurch erreichen, daß als Arbeitszylinder ein pneumatischer Zylinder vorgesehen ist, dessen auf einer Seite des Kolbens befindlicher Arbeitsraum, der von einer Druckluftquelle zur Erzeugung des Kraftmomentes beaufschlaft ist, zum Einstellen eines bei allen Neigungen des Auslegers gleichbleibenden Druckes mit einem Regelventil verbunden ist. Je nach der Größe der zu bewegenden Last wird bei dieser bevorzugten Ausführungsform das Regelventil auf einen Druck eingestellt, bei dem z.B. die Last im horizontalen Zustand des Auslegers ausgeglichen ist. Man kann aber auch die Last bei einer beliebigen innerhalb des vorgesehenen Wippbereiches liegenden Neigung des Auslegers ausgleichen, z.B. in der Lage des Auslegers, in der die Last an diesen angehängt werden kann.

In Fällen, bei denen man damit rechnen muß, daß die Last, während sie am Ausleger hängt, abfallen kann und dadurch der Ausleger durch den konstanten Druck im Arbeitszylinder hochschnellen würde, so daß dadurch ein Unfall verursacht werden könnte, ist bei einer weiteren vorteilhaften Ausführungsform der Erfindung vorgesehen, daß zwischen dem Ausleger und dem Träger mindestens ein automatischer Sicherheitsgurt angeordnet ist, der bei einer unerwartet plötzlich auftetenden großen Differenz zwischen Last- und Kraftmoment eine Wippbegeweung des Auslegers automatisch blockiert.

Neben dem Sicherheitsgurt, der ein Hochschnellen des Auslegers vermeiden soll, kann auch ein Sicherheitsgurt vorgesehen sein, der ein Abfallen des Auslegers verhindert, wenn der Arbeitsdruck im Arbeitszylinder unerwarteterweise plötzlich absinkt.

Bei Hebezeugen für größere Lasten kann es von Vorteil sein, das Lastmoment des Auslegers selbst nicht durch ein Gegengewicht auszugleichen, um dadurch die beim Beschleunigen der Last auftretenden Trägheitskräfte möglichst klein zu halten. Damit wird aber die Größe der mit dem Hebezeug gemäß der Erfindung zu handhabenden Lasten verringert. Bei einer bevorzugten Ausführungsform ist daher vorgesehen, daß zum Ausgleich des Eigengewichtes des Auslegers an einem über die waagerechte Wippachse vorstehenden Arm des Auslegers ein Gegengewicht angeordnet ist.

Die Erfindung ist in der folgenden Beschreibung von in der Zeichnung dargestellten Ausführungsbeispielen im einzelnen erläutert.

Es zeigen:

Fig. 1 eine Seitenansicht eines Hebezeuges gemäß der Erfindung;

Fig. 2 eine abgebrochen dargestellt Teildraufsicht;

Fig. 3 und 4 Schnitte nach den Linien III—III bzw. IV—IV in Fig. 1;

Fig. 5 eine verkleinert und schematisiert dargestellte Draufsicht des Hebezeuges nach Fig. 1;

Fig. 6 ein Diagramm;

Fig. 7 und 8 eine Draufsicht bzw. einen Schnitt nach der Linie VIII—VIII in Fig. 7 des freien Auslegerendes eines abgewandelten Ausführungsbeispieles.

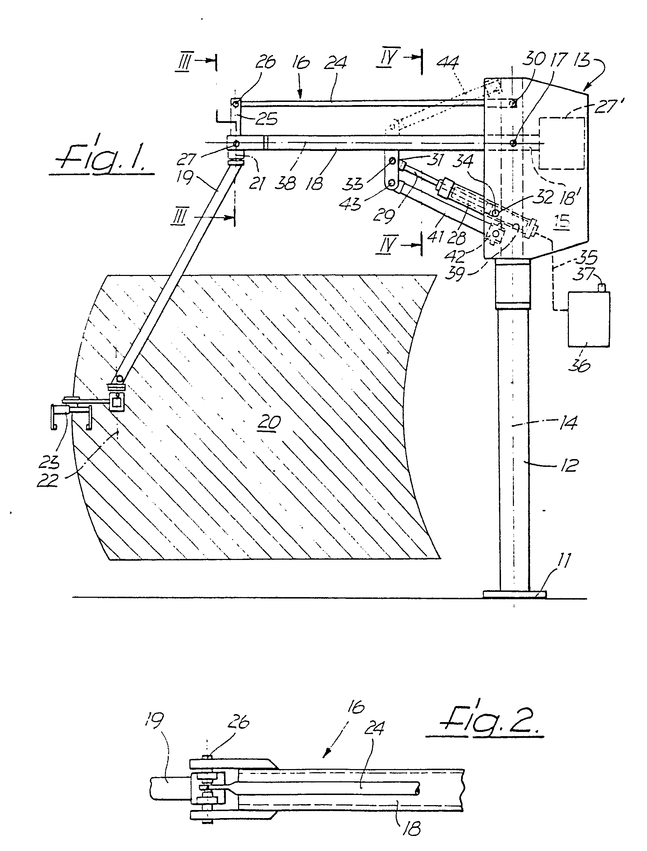

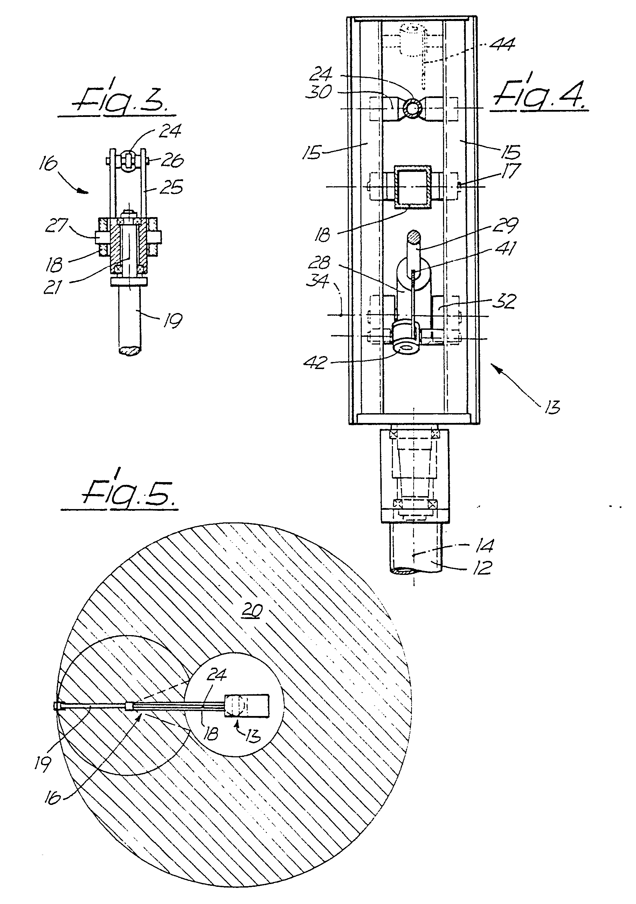

Das im Ganzen in Fig. 1 in Seitenansicht dargestellteerste Ausführungsbeispiel eines Hebezeuges weist eine mit einem Fuß 11 versehene vertikale Säule 12 auf, an deren oberem Ende ein Träger 13 um die vertikale Säulenachse 14 drehbar gelagert ist, wie das insbesondere aus Fig. 4 ersichtlich ist. Der Träger 13 weist zwei einander parallele Tragplatten 15 auf, zwischen denen ein als Ganzes mit 16 bezeichneter Ausleger um eine waagerechte Achse 17 schwenkbar gelagert ist. Der Ausleger 16 hat zwei Arme 18 und 19, von denen der erste Arm 18 um die waagerechte Achse 17 Wippbar mit dem Träger 13 verbunden ist und an seinem freien Ende den um eine vertikale Achse 21 drehbaren zweiten Arm 19 trägt, der gegenüber der Vertikalen geneigt ist und an seinem freien Ende einen um eine vertikale Achse 22 schwenkbaren Greifer 23 trägt, der zum Greifen einer Last vorgesehen ist. Durch diese Lagerung des Auslegers 16 kann der Greifer und damit die an diesem hängende Last innerhalb des in den Fig. 1 und 5 schraffiert dargestellten dreidimensionalen Raumes 20 bewegt werden.

Der erste Auslegerarm 18 ist mit einem Parallelogrammgestänge verbunden, das eine parallel zum ersten Arm 18 verlaufende Stange 24 aufweist, die um eine über der waagerechten Wippachse 17 in der Säulenachse 14 angeordnete waagerechte Achse 30 Wippbar mit dem Träger 13 verbunden ist und an ihrem freien Ende mit einem vertikalen kuzen Schenkel 25 mittels eines Gelenkes mit waagerechter Drehachse 26 verbunden ist, der wiederum mit einem zweiten Gelenk mit waagerechter Achse 27 mit dem ersten Arm 18 des Auslegers verbunden ist. Dieser Schenkel 25 trägt an seinem unteren Ende ein Lager für die um die Achse 21 schwenkbare Lagerung des zweiten Auslegerarmes 19. Der erste Arm 18, die Stange 24, der Schenkel 25 sowie der zwischen den Achsen 17 und 30 befindliche vertikale Teil des Trägers 13 bilden somit ein Parallelogramm, bei dem beim Wippen des ersten Auslegerarmes 18 um die waagerechte Achse 17 der vertikale kurze Schenkel 25 in jeder Wipplage immer seine vertikale Stellung beibehält, so daß der zweite Auslegerarm 19 in allen seinen Stellungen um die vertikale Achse 21 immer die gleiche Neigung gegenüber der Horizontalen hat und gleichzeitig bewirkt, daß beim Schwenken des zweiten Auslegerarmes 19 um die Achse 21 keine Änderung des Lastmomentes eintritt.

Zum Ausgleich des Eigengewichtes des Auslegers 16 ragt der erste Arm 18 über seine Wippachse 17 hinaus und bildet so einen Hebel 18', an dessen freiem Ende ein Gegengewicht 27 befestigt ist.

Zum Ausgleich einer am Greifer 23 hängenden Last ist ein pneumatischer Arbeitszylinder 28 vorgesehen, dessen Kohlenstange 29 mit dem ersten Auslegerarm 18 durch ein Gelenk 31 verbunden ist und dessen Zylinder selbst mit dem Träger 13 durch ein Gelenk 32 verbunden ist. Die Achse 33 des Gelenkes 31 und die Achse 34 des Gelenkes 32 verlaufen parallel zur Auslegerwippachse 17. Der Druckraum 39 des Arbeitszylinders 28 ist über eine Leitung 35 mit einer nur schematisch dargestellten Druckluftquelle 36 verbunden, bei der der Druck der Druckluft durch ein Regelventil 37 regelbar ist, so daß bei einem durch das Regelventil 37 eingestellten Druck dieser in allen Wippstellungen des Auslegers 16 konstant gehalten wird. Die wirksame Länge des Auslegers 16, nämlich der Abstand zwischen den beiden waagerechten Achsen 17 und 27, beträgt beim dargestellten Ausführungsbeispiel 150 cm. Die Achse 33 des Gelenkes 31 ist hierbei in einem längs der Längsachse 38 des ersten Auslegerarmes 18 gemessenen Abstand von 66 cm von der Auslegerwippachse 17 und in einem senkrecht zu der Längsachse 38 gemessenen Abstand von 9,5 cm unterhalb dieser und damit von der wippachse 17 angeordnet. Die Achse 34 des Gelenkes 32 ist in einem vertikal gemessenen Abstand von 34 unterhalb und in einem waagerecht gemessenen Abstand von 13,5 cm von der Auslegerwippachse 17 angeordnet. Der Arbeitszylinder 28 hat hierbei einen Hub, der den wippbereich des Auslegers 16 auf ±30° gegenüber der waagerechten Stellung begrenzt.

Durch einen plötzlichen Druckabfall des Luftdruckes im Arbeitsraum 39 des Arbeitszylinders 28 oder durch Abfallen der Last vom Greifer 23 kann plötzlich eine unerwartet große Differenz zwischen Last- und Kraftmoment auftreten. Um beim Auftreten einer solchen großen Differenz eine wippbewegung des Auslegers automatisch zu blockieren, ist beim dargestellten Ausführungsbeispiel zum Blockieren der Abwärtsbewegung im Arbeitszylinder 28 eine seine Kolbenstange 29 blockierende, in der Zeichnung nicht näher dargestellt, handelsübliche Bremse vorgesehen, die beim Abfallen des Druckes im Arbeitszylinder sofort einsetzt und dadurch die wippbewegung des Auslegers nach unten blokkiert.

Um das Hochwippen des Auslegers beim Abfallen einer Last vom Greifer 23 zu verhindern, ist beim dargestellten Ausführungsbeispiel ein Sicherheitsgurt 41 vorgesehen, der in bekannter Weise auf eine Trommel 42 aufgewickelt ist, auf die ein in Richtung der Aufwicklung wirkende Rückholfeder einwirkt und die mit einem Verriegelungsmechanismus versehen ist, der auf eine bestimmte Geschwindigkeit der Abzugsbewegung des Gurtes oder bei einer Beschleunigung desselben anspricht und die Trommel blockiert. Diese Trommel 42 ist, wie aus den Fig. 1 und 4 ersichtlich ist, zwischen den Tragplatten 15 schwenkbar gelagert. Das aus der Trommel herausragende Ende des Gurtes 41 ist durch ein Gelenk 43 mit dem ersten Auslegerarm 18 verbunden.

Bei einer in Fig. 1 nur gestrichelt dargestellten Abwandlung ist entweder anstelle des automatische blockierbaren Zylinders 28 oder auch zusätzlich dazu ein zweiter Sicherheitsgurt 44 vorgesehen, der bei einem plötzlichen Druckabfall des Druckes im Arbeitszylinder 28 ein Abfallen des Auslegers 16 verhindert. Sicherheitsgurte dieser Art sind in den verschiedensten Ausführungsformen allgemein bekannt und in verschiedenen Ausführungen auf dem Markt erhältlich. Eine nähere Beschreibung derselben erübrigt sich daher.

Wird eine Last am Greifer 23 des Auslegers 16 angehängt, dann kann diese Last mittels des Arbeitszylinders 28 durch Zufuhr von Druckluft in dem Arbeitsraum 39 des Arbeitszylinders 28 un eine beliebige Stellung angehoben werden, z.B. in eine Stellung, bei der sich der erste Auslegerarm 28 in einer horizontalen Ebene befindet. Aus diese in Fig. 1 dargestellten Stellung heraus kann nun die Last innerhalb des gesamten Raumes 20 von Hand bewegt werden, wenn der Druck der Druckluft im Arbeitsraum 39 des Arbeitszylinders 28 durch das Regelventil 37 konstant gehalten wird. Die hierbei von der Bedienungsperson zum Heben der Last erforderliche manuelle Kraft in kg ist in dem in Fig. 6 dargestellten Diagramm als Ordinate über den in Winkelgraden angegebenen Neigungen des ersten Auslegerarmes 18 gegenüber der Horizontalebene angegeben. Die im Diagramm angegebenen Werte ergeben sich dann, wenn eine Last von 73,43 bei waagerechter Stellung des ersten Auslegerarmes 18 durch den Arbeitszylinder 28 ausgeglichen ist. Aus dem Diagramm in Fig. 6 ist ersichtlich, daß die hierbei erforderlichen, von der Bedienungsperson manuell aufzubringenden Kräfte bei jeder zwischen Plus und Minus 30° liegenden Neigung des ersten Auslegerarmes unter 2 kg liegen. Die größte nach unten gerichtet Kraft, die die Bedienungsperson hierbei aufwenden muß, tritt bei einer Neigung von −30° des ersten Auslegerarmes auf und beträgt −1,61 kg. Das bedeutet, daß innerhalb dieses Bereiches noch eine Last von 91,2 kg bewegt werden kann, wenn die größte manuell aufzubringende Kraft −2 kg beträgt. Durch eine geringe Beschränkung des wippbereichs des Auslegers auf einen Bereich von −28,5 bis +30°, kann die größte aufzubringende manuelle Kraft bei einer Last von 73,43 kg auf weniger als 1 kg verringert werden. Das bedeutet, daß bei dieser Beschränkung des wippbereiches des Auslegers Lasten von rund 150 kg mit einer manuellen Kraft bis zu 2 kg auf und ab bewegt werden können.

Wie bereits oben ausgeführt, muß der vollständige Ausgleich des Lastmomentes mit dem vom Arbeitszylinder 28 aufgebrachten Kraftmoment nicht bei einer waagerechten Lage des ersten Auslegerarmes 18 erfolgen. Bei der oben zuletzt beschriebenen Beschränkung des wippbereiches des Auslegers ist dann, wenn das Lastmoment in der untersten Stellung des Auslegers, also bei −28,5°, ausgeglichen ist, im äußersten Fall eine manuelle Kraft von weniger als 2 kg aufzubringen, um die Last innerhalb des gesamten Raumes 20 auf und ab zu bewegen.

Daß bei dem Bewegen der Last innerhalb einer Horizontalebene auch beim Schwenken des zweiten Auslegerarmes 19 keine durch das Gewicht der Last verursachte manuelle Kräfte aufgebracht werden müssen, braucht nicht näher erklärt zu werden.

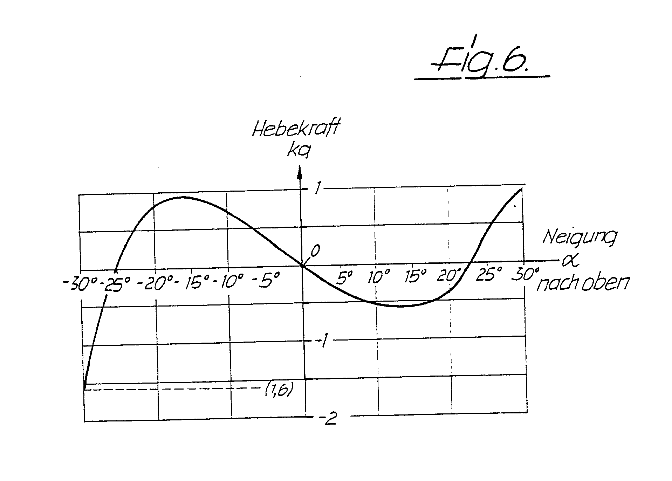

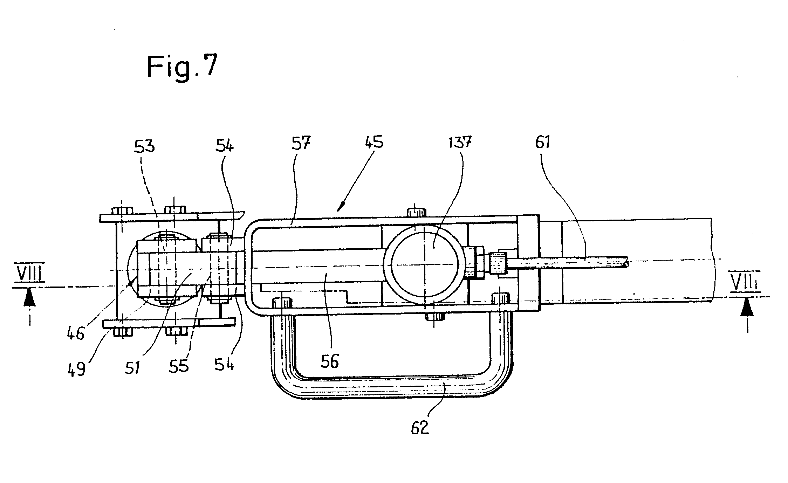

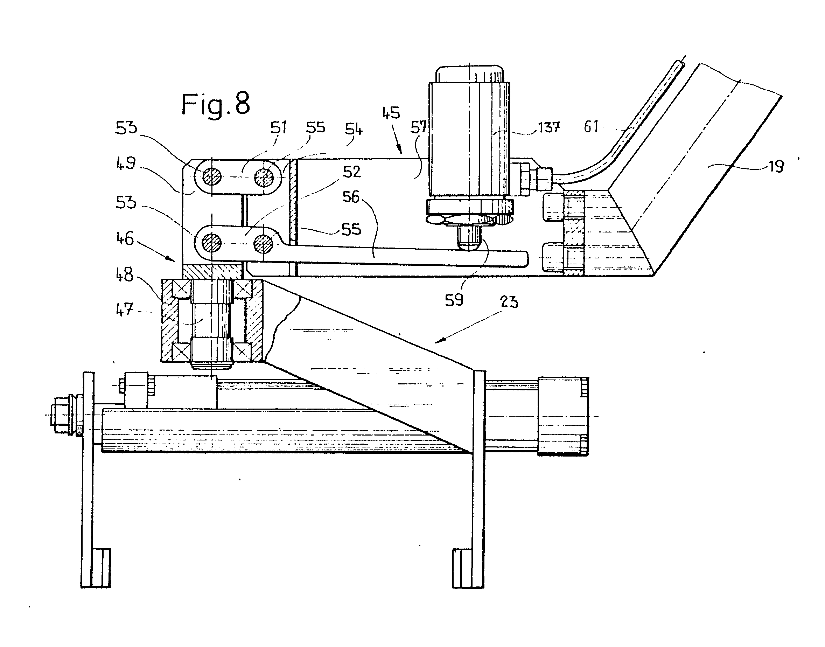

Von dem zweiten Ausführungsbeispiel ist in den Fig. 7 und 8 nur das freie Auslegerende dargestellt, da dieses zweite Ausführungsbeispiel in den übrigen Teilen im wesentlichen dem ersten Ausführungsbeispiel entspricht, so daß bei der Beschreibung des zweiten Ausführungsbeispiels, soweit die Erwähnung der in den Fig. 8 und 8 nicht dargestellen Teile des Auslegers erforderlicht ist, auf die Figuren 1 bis 5 Bezug genommen wird, wobei für die mit dem ersten Ausführungsbeispiel übereinstimmenden Teile des zweiten Ausführungsbeispiels auch die gleichen Bezugszahlen verwendet werden.

Das zweite Ausführungsbeispiel unterscheidet sich vom ersten dadurch, daß hier der als Lastaufnahmemittel dienende Greifer 23 mit dem als Ganzes mit 45 bezeichneten freien Auslegerende des zweiten Auslegerarmes 19 relativ zu dem Ende 45 auf und ab bewegbar verbunden ist. Zu diesem Zweck ist ein Greiferträger 46 vorgesehen, dessen unterer Teil als Lagerbolzen 47 ausgebildet ist, auf dem mittels eines Rillenkugellagers 48 der Greifer 23 um die vertikale Achse des Lagerbolzens 47 drehbar gelagert ist. Das obere Ende des Greiferträgers ist als Gabel 48 ausgebildet, in der zwei einander parallele Arme 51 und 52 um Bolzen 53 wippbar gelagert sind. Die anderen Enden dieser Arme 51 und 52 sind in einer Gabel 54 des Auslegerendes 45 um Bolzen 55 wippbar gelagert, so daß die Arme 51 und 52 ein Parallelogrammgestänge für die bewegliche Verbindung zwischen dem Greifer 23 und den Auslegerende 45 bilden. Der untere Arm 52 weist eine Verlängerung 56 auf, die in den Hohlraum eines kastenförmigen Teilen 57 des Auslegerendes 45 eingreift, in dem ein Feinregelventil 137 angeordnet ist, an dessen Stößel 59 die Verlängerung 56 von unten anliegt, so daß durch die im Feinregelventil 137 enthaltene Rückstellfeder der Stößel 59 in seiner untersten Stellung und damit der Greifer 23 in seiner obersten Stellung relativ zum freien Ende 45 des Auslegers gehalten wird. Das Feinregelventil 137 ist über eine Druckleitung mit der Druckmittelquelle 36 und über eine Arbeitsleitung mit dem Arbeitsraum 39 des Arbeitszylinders 28 verbunden. Die Druckleitung und die Arbeitsleitung sind in einem Schlauch 61 zusammengefaßt.

Der Arm 52 und die Verlängerung 56 bilden einen um den Bolzen 55 schwenkbaren zweiarmigen Hebel mit verhältnismäßig großen Unterschieden der beiden Hebellängen, so daß die am Greifer 23 hängende Last mit einer starken Untersetzung auf den Stößel 59 einwirkt. Dieses Hebelverhältnis ist so gewählt, daß bei der größten, vom Greifer 23 zu erfassenden Last diese noch durch den Maximalwert der auf den Stößel 59 wirkende Rückstellkraft aufgenommen werden kann und daß bei leerem Greifer der Stößel 59 bis zu seinem Anschlag aus dem Feinregelventil 137 herausragt. Außerdem ist dafür Sorge getragen, daß der Minimalwert der Rückstellkraft des Stößels 59 am Anfang noch so klein ist, daß der Stößel 59 durch ein manuelles Anheben des Auslegerendes 45 relativ zu dem an einer Last befestigten Greifer 23 etwas gegen diese Rückstellkraft in das Feinregelventil 137 hineingedrückt werden kann. Dadurch wird aber sofort der Druck im Arbeitsraum 39 des Arbeitszylinders 28 erhöht, so daß die manuell aufgebrachte Kraft zum Anheben des Auslegers durch diese Druckerhöhung aufgehoben wird, was der Bedienungsperson nun ermöglicht, das Auslegerende relativ zum Greifer weiter anzuheben, so lange, bis der Druck im Arbeitsraum des Arbeitszylinders dazu ausreicht, die Last zu tragen. Bei einem weiteren Anheben des Auslegerendes ändert sich die Belastung des durch den Arm 52 und die Verlängerung 56 gebildeten zweiarmigen Hebels nicht mehr, so daß sich auch die Relativstellung des Greifers 23 relativ zum Auslegerende 45 nicht mehr ändert, was zur Folge hat, daß bei einer weiteren Bewegung des Auslegerendes der Druck im Arbeitszylinder konstant bleibt und nun der am Greifer 23 hängenden Last angepaßt ist.

Um das Auslegerende bequem manipulieren zu können, ist am kastenförmigen Teil 57 des Auslegerendes 45 ein bügelförmiger Handgriff 62 vorgesehen, der gleichzeitig die Bedienungsperson gewissermaßen auffordert, beim Manipulieren der Last das Auslegerende und nicht etwa den Greifer zu erfassen. Damit ist eine sachgemäße Handhabung des Hebezeuges gewährleistet.

Anstelle des Feinregelventils 137 kann ein beliebiges anderes bekanntes elektrisches, pneumatisches oder hydraulisches Steuergerät verwendet werden, das geeignet ist, direkt oder über ein weiteres Steuergerät im Druckraum 28 des pneumatischen oder eines hydraulischen Arbeitszylinders einen bei allen in Frage kommenden Neigungen des Auslegers 16 konstant bleibenden Arbeitsdruck einzustellen, der zum erfindungsgemäßen Ausgleich des Lastmomentes erforderlich ist.

**Patentansprüche**

1. Hebezeug zum manuellen Bewegen von Lasten mit einem Ausleger (16), der einen ersten und einen zweiten Arm (18 bzw. 19) aufweist, von denen der erste Arm (18) zum Einstellen verschiedener Neigungen um eine Auslegerwippachse (17) wippbar mit einem Träger (13) und mit einem Parallelogrammgestänge (24, 25) verbunden ist, dessen der Auslegerwippachse (17) benachbarter kurzer Schenkel fest mit dem Träger (13) verbunden ist und dessen anderer kurzer Schenkel (25) ein Schwenklager mit vertikaler Schwenkachse (21) für das eine Ende des zweiten Armes (19) trägt, dessen anderes Ende in einem horizontalen Abstand von seiner Schwenkachse (21) mit einem Lastaufnahmemittel (23) versehen ist, wobei zum Ausgleichen des Lastmomentes ein Arbeitszylinder (28) vorgesehen ist, der mit dem Ausleger (16) und dem Träger (13) durch Gelenke (31 bzw. 32) verbunden ist, deren Gelenkachsen (33 bzw. 34) parallel zu Auslegerwippachse (17) verlaufen, dadurch gekennzeichnet, daß ein Regelgerät (Regelventil 37, 137) vorhanden ist, mittels dessen ein Arbeitsdruck im Arbeitszylinder (28) einstellbar ist, der sich bei einer Wippbewegung des Auslegers (16) nicht ändert, daß die Gelenkachsen (33 bzw. 34) des Arbeitszylinders (28) am Ausleger (16) und am Träger (13) in solchen Stellungen relativ zu diesen angeordnet sind, daß, wenn in einer ausgeglichenen mittleren Wippstellung des Auslegers (16) des Lastmoment durch das Kraftmoment ausgeglichen ist, der Ausleger sich bezüglich der Wippachse (17) in einem labilen Gleichgewicht befindet, so daß beim Wippen des Auslegers um seine Wippachse aus seiner ausgeglichenen Wippstellung heraus die dabei verursachten Differenzen zwischen Last- und Kraftmoment in einem im Verhältnis zu einem Ausleger mit stabilem Gleichgewicht in der ausgeglichenen Stellung großen Wippbereich von einer neben der Last angreifenden Bedienungsperson manuell sicher und ohne Anstrengung beherrschbar sind.

2. Hebezeug nach Anspruch 1, dadurch gekennzeichnet, daß im Wippbereich (−30° bis +30°) des Auslegers (16) über und unter der ausgeglichenen, mittleren Wippstellung (0°) je eine weitere ausgeglichene Wippstellung (−25° und +22,5°) vorhanden ist, in denen sich der Ausleger in einem stabilen Gleichgewicht befindet.

3. Hebezeug nach Anspruch 1 oder 2, dadurch gekennzeichnet, daß die Anordnung der Gelenkachsen (33 bzw. 34) so getroffen ist, daß beim Wippen des Auslegers (16) innerhalb eines im gegebenen Fall praktisch in Frage kommenden Wippbereiches die dabei auftretenden größten Differenzen zwischen Last- und Kraftmoment ein Minimum bilden.

4. Hebezeug nach einem der Ansprüche 1 bis 3, dadurch gekennzeichnet, daß der Ausleger (16) zum Steuern des Regelgerätes (Regelventil 137) mit dem Lastaufnahmemittel (Greifer 23) relativ zu diesem nach oben gegen eine Rückstellkraft bewegbar verbunden ist, deren Maximalwert durch eine Übersetzung der zu hebenden Last und deren Minimalwert der manuellen Kraft der Bedienungsperson angepaßt sind, so daß die Bedienungsperson den Ausleger relativ zu dem mit der Last verbundenen Lastaufnahmemittel hochwippen und dadurch das Regelgerät (Regelventil 137) betätigten kann, bis im Arbeitzylinder (28) eine der Last angepaßter Arbeitsdruck eingestellt ist.

5. Hebezeug nach einem der Ansprüche 1 bis 4, dadurch gekennzeichnet, daß als Arbeitszylinder (28) ein pneumatischer Zylinder vorgesehen ist, dessen Arbeitsraum (39) mit einer Quelle (36) für Druckluft verbunden ist, und daß als Regelgerät zum Einstellen eines bei allen Neigungen (α) des Auslegers (16) gleichbleibenden Arbeitsdruckes im Arbeitszylinder ein Regelventil (37, 137) vorgesehen ist.

6. Hebezeug nach Anspruch 4 oder 5, dadurch gekennzeichnet, daß das Lastaufnahmemittel (Greifer 23) mit dem Ausleger (16) durch ein Parallelogrammgestänge (Arme 51, 52) verbunden ist, daß das Regelgerät (Regelventil 137) am Ausleger neben dem Parallelogrammgestänge angeordnet ist und ein Arm (52) des Parallelogrammgestänges mit einer Verlängerung (56) zum steuern des Regelgerätes versehen ist.

7. Hebezeug nach einem der Ansprüche 1 bis 6, dadurch gekennzeichnet, daß am Ausleger (16) ein Handgriff (62) vorhanden ist, der für das manuelle Bewegen des Auslegers relativ zum Lastaufnahmemittel (Greifer 23) vorgesehen ist.

8. Hebezeug nach einem der Ansprüche 1 bis 7, dadurch gekennzeichnet, daß der Träger (13) des Auslegers (16) um eine vertikale Achse (14) drehbar mit einem vorzugsweise als Säule (12) ausgebildeten Gestell verbunden ist.

9. Hebezeug nach einem der Ansprüche 1 bis 8, dadurch gekennzeichnet, daß gemessen von der waagerechten Wippachse (17) des Auslegers (16) die Gelenkachse (33) des Arbeitszylinders (28) am Ausleger (16) sich bei einer wirksamen Länge desselben von etwa einhundertfünfzig cm in längs und senkrecht zu der Auslegerlängsachse (38) gemessenen Abständen von etwa sechsundsechszig bzw. neuneinhalb cm befindet und seine Gelenkachse (34) am Träger (13) in vertikal und waagerecht gemessenen Abständen von etwa vierunddreißig bzw. dreizehneinhalb cm Abstand angeordnet ist und daß der Hub des Arbeitszylinders (28) so bemessen ist, daß er einen Wippbereich des Auslegers um etwa ± dreißig Grad gegenüber der waagerechten Stellung zuläßt.

10. Hebezeug nach einem der Ansprüche 1 bis 9, dadurch gekennzeichnet, daß zum Ausgleich des Eigengewichtes des Auslegers (16) an einem über die waagerechte Wippachse vorstehenden Hebel (18') des Auslegers ein Gegengewicht (27) angeordnet ist.

11. Hebezeug nach einem der Ansprüche 1—10 dadurch gekennzeichnet, daß zwischen dem Ausleger (16) und dem Träger (13) mindestens ein automatischer Sicherheitsgurt (41, 44) eingespannt ist, der bei einer unerwartet plötzlich auftretenden großen Differenz zwischen Last- und Kraftmoment eine Wippbewegung des Auslegers automatisch blockiert.

12. Hebezeug nach Anspruch 11, dadurch gekennzeichnet, daß für den Fall des Abfallens einer vom Ausleger (16) getragenen Last der Gurt (41) unterhalb des Auslegers mit dem Träger (13) verbunden ist.

13. Hebezeug nach Anspruch 11 oder 12, dadurch gekennzeichnet, daß für den Fall des Versagens der Hebevorrichtung der Gurt (44) über dem Ausleger (16) mit dem Träger (13) verbunden ist.

**Revendications**

1. Appareil de levage pour le déplacement à la main de charges, avec une flèche (16) qui comprend un premier et un second bras (18 ou 19) dont le premier bras (18) est, pour le réglage de diverses inclinaisons, relié à un support (13) en basculement sur un axe (17) de basculement de la flèche, et à un parallélogramme (24, 25) dont la branche courte voisine de l'axe (17) de basculement de la flèche est solidaire du support (13) et dont l'autre branche courte (25) porte un tourillon à axe de pivotement vertical (21) pour une extrémité du second bras (19), dont l'autre extrémité est munie à une distance horizontale de son axe de pivotement (21) d'un moyen (23) de suspension de la charge, et un vérin (28) étant prévu pour compenser le couple résistant et relié à la flèche (16) et au support (13) par des articulations (31 ou 32) dont les axes (33 ou 34) sont parallèles à l'axe (17) de basculement de la flèche, ledit appareil étant caractérisé en ce qu'un dispositif de régulation (valve de régulation 37, 137) est prévu pour le réglage dans le vérin (28) d'une pression ne variant pas lors d'un basculement de la flèche (16); les axes d'articulation (33 ou 34) du vérin (28) sur la flèche (16) et le support (13) sont disposés par rapport à ces derniers dans des positions telles que lorsque le couple moteur équilibre le couple résistant dans une position moyenne équilibrée de basculement de la flèche (16), cette dernière se trouve en équilibre stable par rapport à l'axe de basculement (17), de sorte qu'un opérateur agissant près de la charge peut maîtriser à la main, de façon sûre et sans effort, les différences des couples résistant et moteur produites par le basculement de la flèche autour de son axe de basculement à partir de sa position équilibrée, sur une plage de basculement grande par rapport à une flèche en équilibre stable dans la position équilibrée.

2. Appareil de levage selon revendication 1, caractérisé en ce que sur la plage de basculement (−30° à +30°) de la flèche (16), au-dessus et au-dessous de la position moyenne équilibrée de basculement (0°), se trouvent respectivement deux autres positions de basculement équilibrées (−25° et +22,5°), dans lesquelles la flèche se trouve en équilibre stable.

3. Appareil de levage selon une des revendications 1 ou 2, caractérisé en ce que la disposition des axes d'articulation (33 ou 34) est telle que les plus grandes différences des couples résistant et moteur apparaissant lors du pivotement de la flèche (16) sur une plage balayée pratiquement dans le cas considéré sont minimales.

4. Appareil de levage selon une quelconque des revendications 1 à 3, caractérisé en ce que pour la commande du dispositif de régulation (valve de régulation 137), la flèche (16) est reliée au moyen de suspension de la charge (pince 23) avec mobilité vers le haut par rapport à ce dernier et contre une force de rappel dont la valeur maximale est adaptée par une réduction à la charge à lever et la valeur minimale est adaptée à la force manuelle de l'opérateur qui peut ainsi faire basculer la flèche vers le haut par rapport au moyen de suspension de la charge relié à cette dernière et par suite actionner le dispositif de régulation (valve de régulation 137), jusqu'à ce qu'une pression adaptée à la charge soit réglée dans le vérin (28).

5. Appareil de levage selon une quelconque des revendications 1 à 4, caractérisé par un vérin (28) pneumatique, dont la chambre de travail (39) est reliée à une source (36) d'air comprimé, et par une valve de régulation (37, 137) constituant les dispositifs de régulation d'une pression de travail constante dans le vérin, pour toutes les inclinaisons (α) de la flèche (16).

6. Appareil de levage selon une des revendications 4 ou 5, caractérisé en ce que le moyen de suspension de la charge (pince 23) est relié à la flèche (16) par un parallélogramme (bras 51, 52); le dispositif de régulation (valve de régulation 137) est disposé sur la flèche, près du parallélogramme, et un bras (52) de ce dernier est muni d'un prolongement (56) pour la commande du dispositif de régulation.

7. Appareil de levage selon une quelconque des revendications 1 à 6, caractérisé en ce que la flèche (16) porte une poignée (62) prévue pour le déplacement manuel de la flèche par rapport au moyen de suspension de la charge (pince 23).

8. Appareil de levage selon une quelconque des revendications 1 à 7, caractérisé en ce que le support (13) de la flèche (16) est relié, en rotation autour d'un axe vertical (14), à un bâti avantageusement réalisé sous forme d'une colonne (12).

9. Appareil de levage selon une quelconque des revendications 1 à 8, caractérisé en ce que, les mesures étant effectués à partir de l'axe (17) de basculement de la flèche (16), l'axe (33) d'articulation du vérin (28) sur la flèche (16) d'une longueur utile d'environ 150 cm se trouve à des distances d'environ 66 ou 9,5 cm, mesurées le long de et perpendiculairement à l'axe longitudinal (38) de la flèche, et l'axe (34) d'articulation sur le support (13) se trouve à des distances d'environ 34 ou 13,5 cm, mesurées verticalement et horizontalement; et la course du vérin (28) est dimensionnée de façon à permettre une plage de basculement de la flèche d'environ ±30° par rapport à la position horizontale.

10. Appareil de levage selon une quelconque des revendications 1 à 9, caractérisé en ce que pour compenser le poids propre de la flèche (16), un contrepoids (27) est disposé sur un levier (18') de la flèche en saillie sur l'axe de basculement horizontal.

11. Appareil de levage selon une quelconque des revendications 1 à 10, caractérisé en ce qu'au moins une sangle de sécurité automatique (41, 44) est tendue entre la flèche (16) et le support (13) pour bloquer automatiquement un mouvement de basculement de la flèche dans le cas de l'apparition soudaine et inattendue d'une grande différence des couples résistant et moteur.

12. Appareil de levage selon revendication 11, caractérisé en ce que la sangle (41) est relié au support (13), au-dessous de la flèche (16), pour le cas de chute d'une charge supportée par ladite flèche.

13. Appareil de levage selon une des revendications 11 ou 12, caractérisé en ce que la sangle (44) est reliée au support (13), au-dessous de la flèche (16), pour le cas d'une défaillance du dispositif de levage.

**Claims**

1. Lifting device for manually moving loads with a jib (16), which is provided with a first and a second arm (18 and 19), of which the first arm (18) is connected to a support (13) and a parallelogram linkage (24, 25), so that it can be derricked about a jib derricking spindle (17) for setting different angles of inclination, whereby the short side of the parallelogram linkage adjoining the jib derricking spindle (17) is connected rigidly to the support (13) and the other short side (25) of the parallelogram linkage carries a pivot bearing with a vertical swivel spindle (21) for one end of the second arm (19), the other end of which is provided with a means of picking up loads (23) located with a horizontal clearance from its swivel spindle (21) and whereby for balancing the load moment a working cylinder (28) is provided, which is connected to the jib (16) and the support (13) by links (31 and 32), the link spindles of which (33 and 34) run parallel to the jib derricking spindle (17), characterised in that a control unit (control valve 37, 137) is provided, by means of which a working pressure can be set in the working cylinder (28), which is not changed during a derricking movement of the jib (16), in that the link spindles (33 and 34) of the working cylinder (28) are arranged at the jib (16) and the support (13) in such positions in relation to the latter, that when the load moment is balanced by the moment of force in a balanced middle derricking position of the jib (16) the jib is in an unstable equilibrium in relation to the derricking spindle (17), so that when derricking the jib about its derricking axis from its balanced derricking position the differences between the load moment and the moment of force resulting from this can be controlled safely manually and without exertion by an operator from a position next to the load in a large derricking range in relation to a jib with a stable equilibrium in the balanced position.

2. Lifting device according to Claim 1, characterised in that a further balanced derricking position (−25° and +22.5°) is provided, in which a jib is in a stable equilibrium in the derricking range (−30° to +30°) of the jib (16) above and below the balanced, middle derricking position (0°).

3. Lifting device according to Claim 1 or 2, characterised in that the link spindles (33 and 34) are so arranged that when the jib (16) is derricked within a derricking range which is liable to occur in practice in a given case, the maximum differences between the load moment and the moment of force which occur during the movement constitute a minimum.

4. Lifting device according to one of Claims 1 to 3, characterised in that the jib (16) for controlling the control unit (valve 137) is connected to the means of picking up the load (gripping device 23) so that it can be moved relative to the latter upwards against a restoring force, the maximum value of which can be adapted to the manual force of the operator by a conversion of the load to be raised and its minimum value, so that the operator can derrick up the jib relative to the means of picking up the load which is connected to the load and thereby operate the control unit (valve 137) until a working pressure which matches the load is set in the working cylinder (28).

5. Lifting device according to one of Claims 1 to 4, characterised in that a pneumatic cylinder is provided as a working cylinder (28), the working space (39) of which is connected to a source (36) of compressed air and in that a control valve (37, 137) is provided as a control unit for setting a working pressure in the working cylinder which is uniform for all angles of inclination (α) of the jib (16).

6. Lifting device according to Claim 4 or 5, characterised in that the means of picking up the load (gripping device 23) is connected to the jib (6) through a parallelogram linkage (arms 51, 52), in that the control unit (control valve 137) is arranged on the jib next to the parallelogram linkage and an arm (52) of the parallelogram linkage is provided with an extension (56) for controlling the control unit.

7. Lifting device according to one of Claims 1 to 6, characterised in that a handle (62) is located on the jib (16), which is provided for manually moving the jib relative to the means of picking up the load (gripping device 23).

8. Lifting device according to one of Claims 1 to 7, characterised in that the support (13) of the jib (16) is connected to a frame for preference in the form of a column (12) so that it can be swivelled about a vertical axis (14).

9. Lifting device according to one of Claims 1 to 8, characterised in that, as measured from the horizontal derricking spindle (17) of the jib (16) the link spindle (33) of the working cylinder (28) on the jib (16) is located with an effective length of the jib of approximately 150 cm at distances of approximately 66 or 9-1/2 cm measured lengthways and perpendicular to the longitudinal axis (38) of the jib and its link spindle (34) is arranged on the support (13) at distances of approximately 34 or 13-1/2 cm as measured vertically and horizontally and that the stroke of the working cylinder (28) has been dimensioned in such a way, that it permits a derricking range of the jib through approximately plus or minus 30° in relation to the horizontal position.

10. Lifting device according to one of Claims 1 to 9, characterised in that for balancing the dead weight of the jib (16) a counterweight (27) is arranged on a lever (18') of the jib which protrudes beyond the horizontal derricking axis.

11. Lifting device according to one of Claims 1 to 10, characterised in that at least one automatic safety belt (41, 44) is clamped between the jib (16) and the support (13), which automatically blocks a derricking movement of the jib in the event of an unexpected large difference between the load moment and the moment of force occurring suddenly.

12. Lifting device according to Claim 11, characterised in that if a load carried by the jib (16) should fall, the belt (41) is connected to the support (13) below the jib.

13. Lifting device according to Claim 11 or 12, characterised in that in the event of a failure of the lifting device, the belt (44) is connected to the support (13) above the jib (16).

Fig. 1.

Fig. 2.

*Fig.3.*

*Fig.4.*

*Fig.5.*

Fig. 6.

# Fig.7

0 069 991

Fig.8

53 49 53 46 48 47

51 55 54 45 57 137 61

52 56 55

59 23

19

0 069 991